## Europäisches Patentamt
## European Patent Office
## Office européen des brevets

(19)

(11) **EP 1 555 666 A1**

(12) **EUROPEAN PATENT APPLICATION**
published in accordance with Art. 158(3) EPC

(43) Date of publication:
**20.07.2005 Bulletin 2005/29**

(51) Int Cl.[7]: **G11B 7/24**, G11B 7/004

(21) Application number: **03760942.7**

(22) Date of filing: **24.06.2003**

(86) International application number:
**PCT/JP2003/007974**

(87) International publication number:
**WO 2004/001735 (31.12.2003 Gazette 2004/01)**

(84) Designated Contracting States:
**AT BE BG CH CY CZ DE DK EE ES FI FR GB GR HU IE IT LI LU MC NL PT RO SE SI SK TR**

(30) Priority: **24.06.2002 JP 2002183498**
**19.02.2003 JP 2003041921**

(71) Applicants:
• **TDK Corporation**
  **Tokyo 103-8272 (JP)**
• **National Institute of Advanced Industrial Science and Technology**
  **Tokyo 100-8921 (JP)**
• **Pioneer Corporation**
  **Tokyo 153-8654 (JP)**
• **Sharp Kabushiki Kaisha**
  **Osaka-shi, Osaka 545-8522 (JP)**
• **Samsung Japan Corporation**
  **Tokyo 103-8488 (JP)**

(72) Inventors:
• **KIKUKAWA, Takashi, TDK Corporation**
  **Tokyo 103-8272 (JP)**
• **TOMINAGA, Junji,**
  **Nat. Inst. of Adv. Ind. Sci & Tec**
  **Tsukuba-shi, Ibaraki 305-8562 (JP)**
• **SHIMA, Takayuki, Nat. Inst. of Adv. Ind. Sci & Tec**
  **Tsukuba-shi, Ibaraki 305-8562 (JP)**
• **TACHIBANA, Akihiro, Pioneer Corporation**
  **Tsurugashima-shi, Saitama 350-2288 (JP)**
• **FUJI, Hiroshi**
  **Souraku-gun, Kyoto 619-0237 (JP)**
• **KIM, Jooho**
  **Tsukuba-shi, Ibaraki 305-8562 (JP)**

(74) Representative: **HOFFMANN - EITLE**
  **Patent- und Rechtsanwälte**
  **Arabellastrasse 4**
  **81925 München (DE)**

(54) **OPTICAL RECORDING/REPRODUCING METHOD AND OPTICAL RECORDING MEDIUM**

(57) A recording mark train is formed in an optical recording medium including a noble metal oxide layer by decomposing a noble metal oxide and deforming the noble metal oxide layer. Noble metal particles are irreversibly deposit in the noble metal oxide layer formed with the recording mark train and a laser beam for reproducing data is irradiated onto the thus deposited noble metal particles, thereby reading the recording mark train. The recording mark train includes at least one recording mark having a length shorter than $0.37\lambda / NA$ wherein $\lambda$ is the wavelength of the laser beam and NA is an optical system for irradiating the laser beam. According to the present invention, in the case of recording and reproducing a recording mark having a size smaller than the resolution limit or a recording mark having a size equal to or larger than the resolution limit but close to the resolution limit in this manner, a high reproduction output can be obtained and a high reproduction durability can be achieved for each of the all recording marks in the recording mark train.

FIG. 14

EP 1 555 666 A1

**Description**

**BACKGROUND OF THE INVENTION**

The present invention relates to a method for optically recording and reproducing data which can record and reproduce a recording mark having a size nearly equal to the resolution limit determined by the diffraction of light or smaller than the resolution limit and an optical recording medium therefor.

**DESCRIPTION OF THE PRIOR ART**

In a data reproducing method using a laser beam, the resolution limit determined by the diffraction of light normally exists. The resolution limit is determined by the wavelength $\lambda$ of the laser beam and the numerical aperture NA of an objective lens. Since the cut-off spatial frequency is $2NA / \lambda$, a recording mark train including a recording mark and a space between neighboring recording marks whose lengths are equal to each other can be read if the spatial frequency thereof is equal to or shorter than $2NA / \lambda$ (line pair / nm). In such a case, the length of the recording mark (space) corresponding to the readable spatial frequency is as follows.

$$\lambda / 4NA = 0.25\lambda / NA$$

In other words, it is impossible to obtain a reproduced signal by reading a recording mark train including a recording mark whose arrangement pitch is shorter than $0.5\lambda / NA$ and which includes a recording mark having a length shorter than $0.25\lambda / NA$. Therefore, in order to read signals recorded in an optical recording medium with a high density, since it is effective to reduce the wavelength $\lambda$ of a laser beam or increase the numerical aperture NA of an objective lens, numerous studies have been done for reducing the wavelength $\lambda$ of a laser beam or increasing the numerical aperture NA of an objective lens.

On the other hand, separately from the studies for reducing the resolution limit, various super-resolution reproduction techniques have been proposed for reading a recording mark having a length shorter than the resolution limit. For example, it is proposed to substantially increase the numerical aperture NA of an objective lens in the medium by providing a layer serving to generate an aperture or the like in response to the irradiation with a laser beam.

Further, for example, in Jpn. J. Appl. Phys. Vol. 39 (2000) pp. 980 to 981, a super-resolution technique utilizing near-field light is described. An optical disc disclosed in this publication is adapted to record and reproduce data using near-field light. The optical disc is constituted by stacking a polycarbonate subtrate, a ZnS-SiO$_2$ layer having a thickness of 170 nm, an AgOx layer (reading-out layer) having a thickness of 15 nm, a ZnS-SiO$_2$ layer having a thickness of 40 nm, a Ge$_2$Sb$_2$Te$_5$ layer (recording layer) having a thickness of 15 nm and a ZnS-SiO$_2$ layer having a thickness of 20 nm from a light incidence plane of a light for recording or reproducing data in this order. The recording layer of the optical disc consists of Ge$_2$Sb$_2$Te$_5$. Therefore, a crystalline recording mark is formed in the amorphous recording layer in this optical disc.

In the above mentioned publication, a recording mark is read by recording a recording mark having a length shorter than the resolution limit, irradiating a laser beam onto the AgOx layer after recording the recording mark, thereby decomposing AgOx into Ag and O$_2$ to generate an Ag probe and generating near-field light around the Ag probe. When the laser beam is moved after reproducing data, Ag and O$_2$ react with each other to form AgOx. Namely, the generation of the Ag probe is reversible. Actually, in accordance with this technique, a recording mark train including a recording mark having a length of 200 nm could be read using a laser beam having a wavelength of 635 nm and an optical system having a numerical aperture of 0.60 (the pitch of the resolution limit: 530 nm; the mark length of the resolution limit: 265 nm). At this time, the reading power was 2.5 mW and the linear velocity was 6.0 m/ sec. However, when a recording mark is read using this super-resolution technique, a carrier to noise ratio (CNR) of a reproduced signal which is one of the measures of a signal intensity is small and not practical. Further, since the reading power for generating the probe in the reading-out layer is relatively high, an amorphous portion of a region of the recording layer where no recording mark is formed tends to be crystallized. Therefore, the recording mark is degraded by repeating reading operations, in other word, the reproduction durability of the recording mark is not sufficiently high.

**SUMMARY OF THE INVENTION**

It is therefore an object of the present invention to record or reproduce a recording mark train including a recording mark having a size nearly equal to the resolution limit determined by the diffraction of light or smaller than the resolution limit, thereby obtaining high reproduction outputs from all recording marks and achieving a high reproduction durability of a recording mark.

The above object of the present invention can be accomplished by the present invention defined in (1) to (8) below.

(1) A method for recording data in an optical recording medium by irradiating a laser beam for recording data thereonto and forming a recording mark train and reproducing data from the optical recording medium by irradiating a laser beam for reproducing data having a wavelength $\lambda$ using an optical system having a numerical aperture NA thereonto and reading the recording mark train,

the optical recording medium comprising a noble metal oxide layer containing a noble metal oxide,

the recording mark train being formed by decomposing the noble metal oxide and deforming the noble metal oxide layer and including at least one recording mark having a length shorter than $0.37\lambda$ / NA, and

the method for recording and reproducing data comprising steps of irreversibly depositing noble metal particles in the noble metal oxide layer and irradiating the laser beam for reproducing data onto the thus deposited noble metal particles, thereby reading the recording mark train.

(2) A method for recording and reproducing data in accordance with (1), wherein the noble metal oxide layer contains at least one of silver oxide, platinum oxide and palladium oxide.

(3) A method for recording and reproducing data in accordance with (1) or (2), wherein the optical recording medium further comprises a first dielectric layer and a second dielectric layer so as to sandwich the noble metal oxide layer.

(4) A method for recording and reproducing data in accordance with (3), wherein the optical recording medium further comprises a light absorption layer containing metal and/or metalloid as a primary component and the light absorption layer and the noble metal oxide layer are disposed so as to sandwich the second dielectric layer.

(5) A method for recording and reproducing data in accordance with (4), wherein the light absorption layer contains at least Sb and/or Te.

(6) A method for recording and reproducing data in accordance with (4) or (5), wherein the optical recording medium further comprises a third dielectric layer, and the third dielectric layer and the second dielectric layer are disposed so as to sandwich the light absorption layer.

(7) A method for recording and reproducing data in accordance with (6), wherein the optical recording medium further comprises a reflective layer containing metal and/or metalloid as a primary component, and the reflective layer and the light absorption layer are disposed so as to sandwich the third dielectric layer.

(8) An optical recording medium comprising a noble metal oxide layer containing a noble metal oxide and the noble metal oxide is constituted as platinum oxide and/or palladium oxide.

## BRIEF DESCRIPTION OF THE DRAWINGS

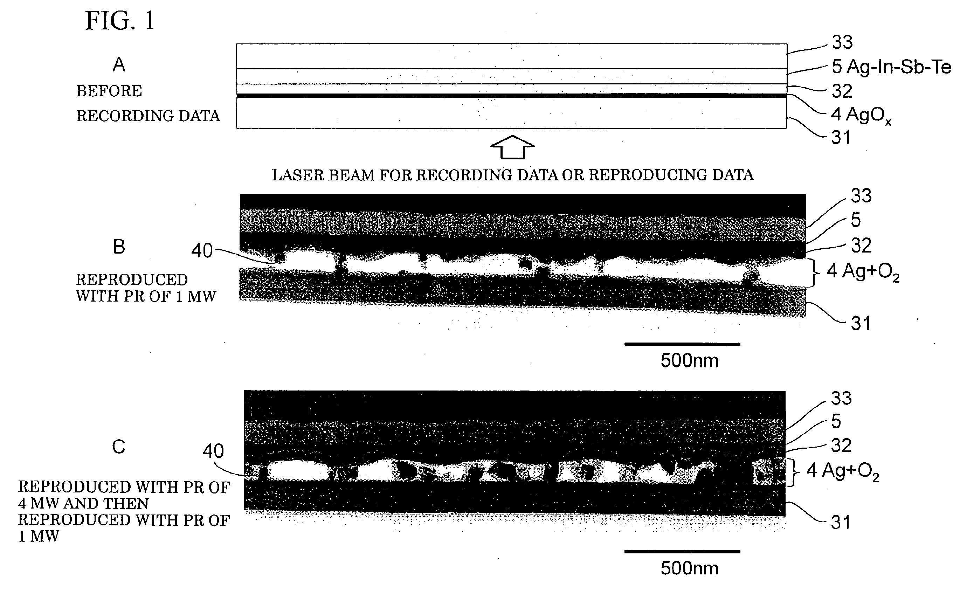

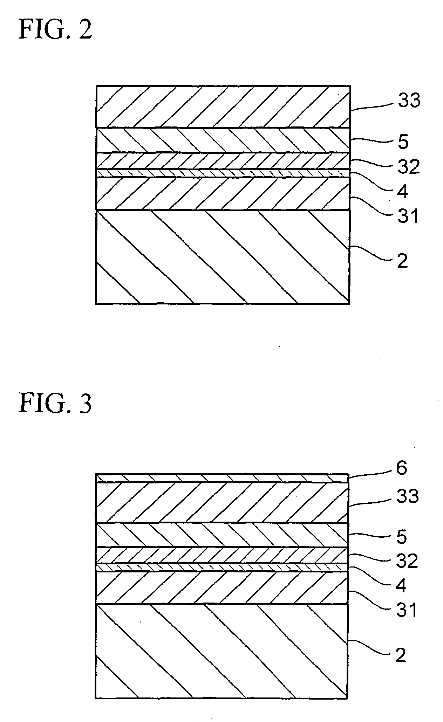

Figure 1A is a cross-sectional view showing a preferred embodiment of an optical recording medium according to the present invention. Figures 1B and 1C are photographs accompanied instead of Figures and each showing a thin film structure and being a transmission electron microscope photograph showing the cross section of the optical recording medium shown in Figure 1A, wherein Figure 1B is a photograph the thin film structure after recording data therein and reproducing the data using a laser beam having a power of 1 mW, and Figure 1C is a photograph showing the thin film structure after recording data therein, reproducing the data using a laser beam having a power of 4 mW and then reproducing the data using a laser beam having a power of 1 mW. Figure 2 is a cross-sectional view showing another preferred embodiment of an optical recording medium according to the present invention.

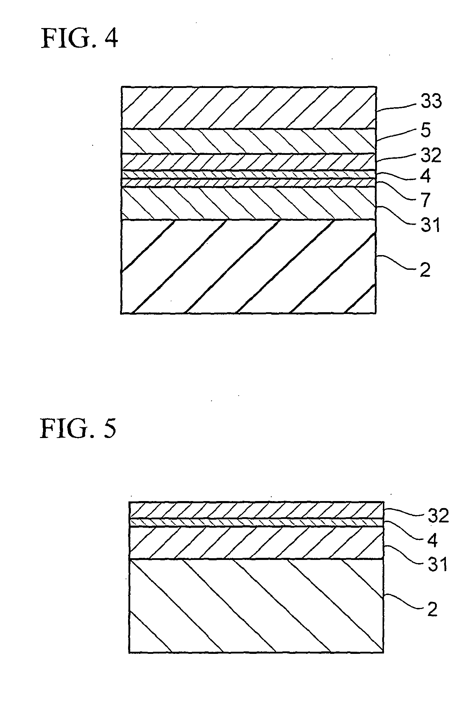

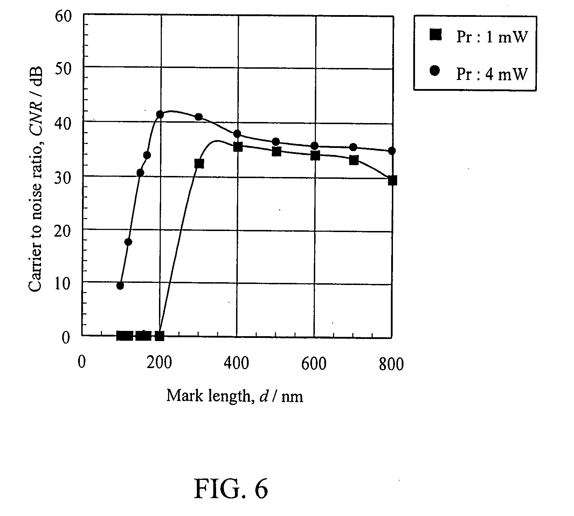

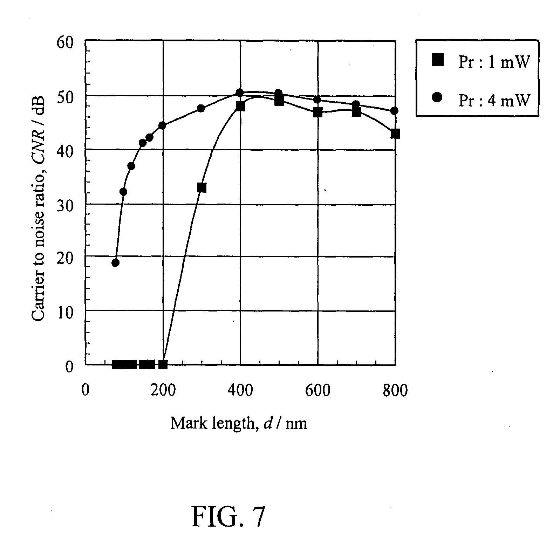

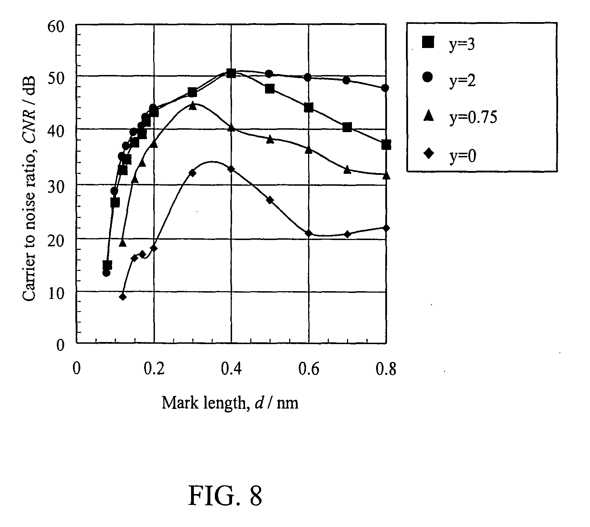

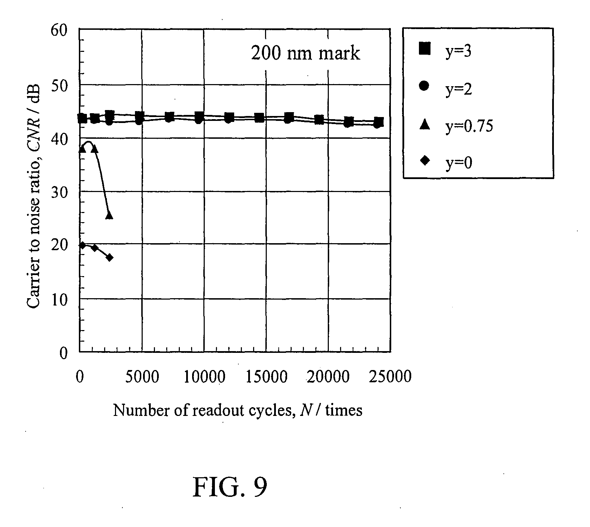

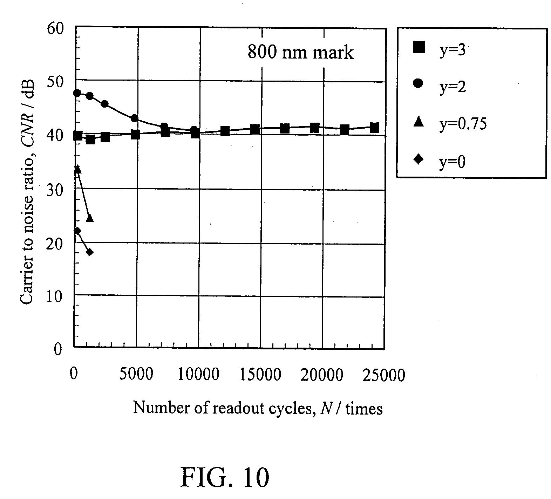

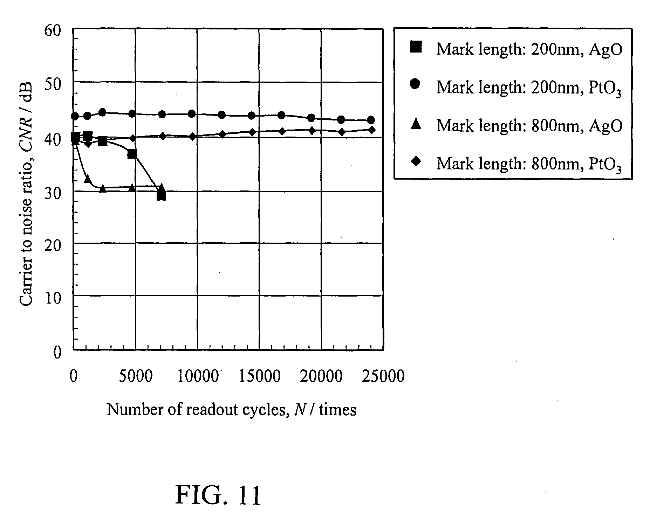

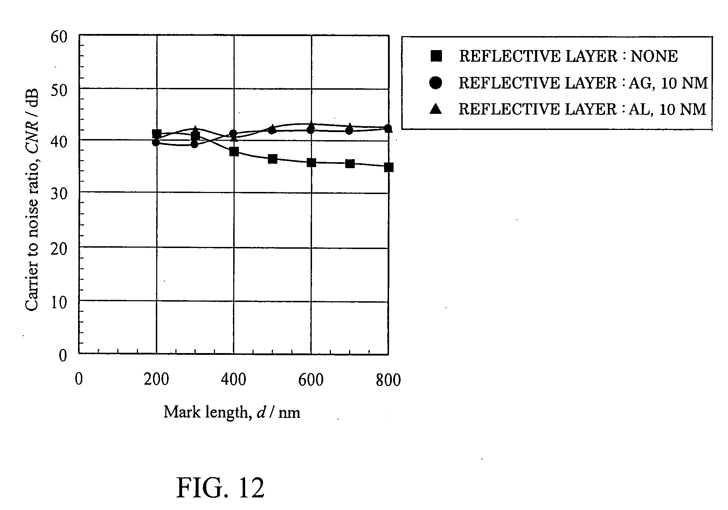

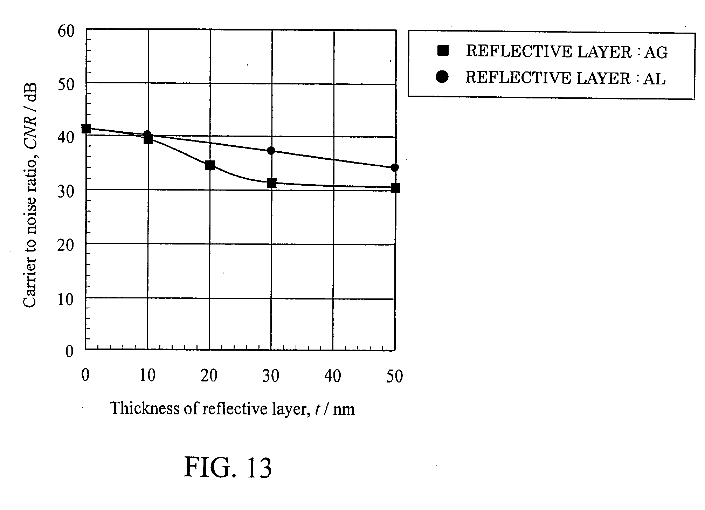

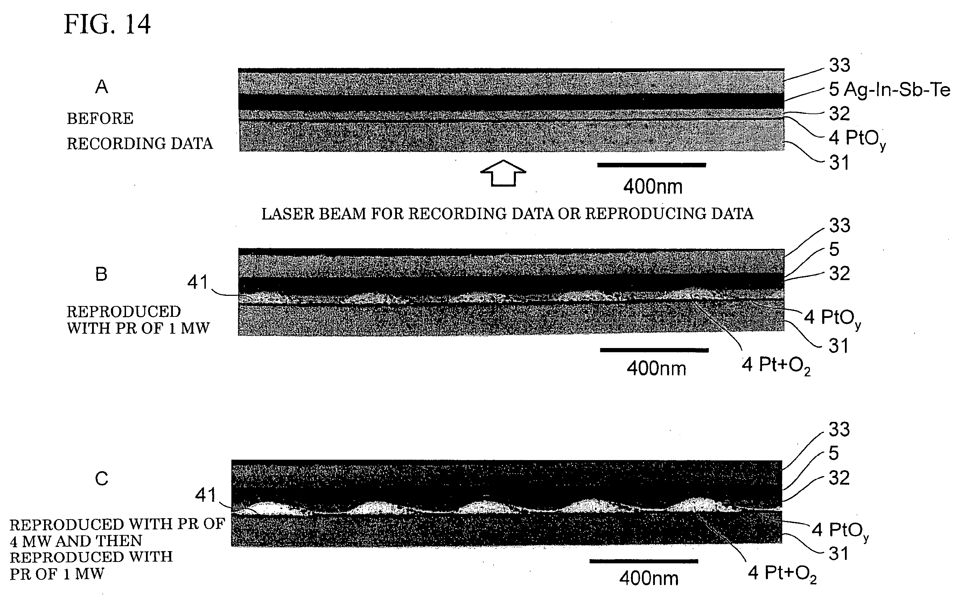

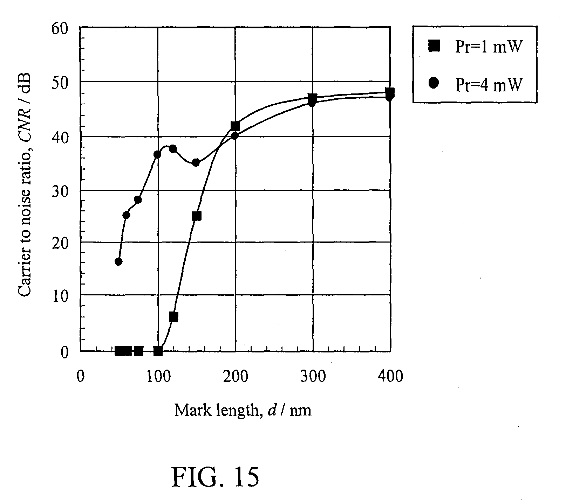

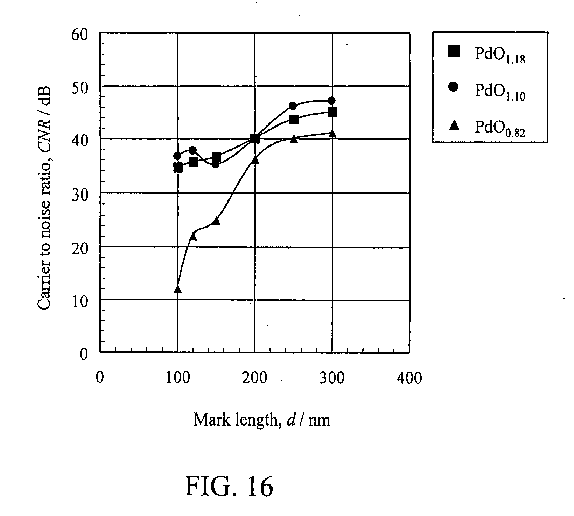

Figure 3 is a cross-sectional view showing a further preferred embodiment of an optical recording medium according to the present invention. Figure 4 is a cross-sectional view showing a still further preferred embodiment of an optical recording medium according to the present invention. Figure 5 is a cross-sectional view showing a yet further preferred embodiment of an optical recording medium according to the present invention. Figure 6 is a graph showing the relationship between the length of a recording mark and a CNR. Figure 7 is a graph showing the relationship between the length of a recording mark and a CNR. Figure 8 is a graph showing the relationship between the length of a recording mark and a CNR. Figure 9 is a graph showing the relationship between the number of reading times and a CNR. Figure 10 is a graph showing the relationship between the number of reading times and a CNR. Figure 11 is a graph showing the relationship between the number of reading times and a CNR. Figure 12 is a graph showing the relationship between the length of a recording mark and a CNR. Figure 13 is a graph showing the relationship between the thickness of a reflective layer and a CNR. Figure 14A is a cross-sectional view showing a preferred embodiment of an optical recording medium according to the present invention. Figures 14B and 14C are photographs accompanied instead of Figures and each showing a thin film structure and being a transmission electron microscope photograph showing the cross section of the optical recording medium shown in Figure 14A, wherein Figure 14B is a photograph the thin film structure after recording data therein and reproducing the data using a laser beam having a power of 1 mW, and Figure 14C is a photograph showing the thin film structure after recording data therein, reproducing the data using a laser beam having a power of 4 mW and then reproducing the data using a laser beam having a power of 1 mW. Figure 15 is a graph showing the relationship between the length of a recording mark and a CNR. Figure 16 is a graph showing the relationship between the length of a recording mark and a CNR.

## DESCRIPTION OF THE PREFERRED EMBODIMENTS

The inventors of the present invention made the discovery that in the case where in an optical recording medium including a noble metal oxide layer, in the case of using the noble metal oxide layer as a recording layer, recording a recording mark having a size smaller than the resolution limit or a recording mark having a size larger than the resolution limit but close to the resolution in the noble metal oxide layer, thereby recording data therein and reproducing the data using a laser beam having a readout power equal to or higher than a threshold value, it was possible to obtain a reproduced signal having a high CNR by utilizing the principle of the super-resolution reproduction and improve the reproduction durability of the recording mark.

Figure 1A is a cross-sectional view showing a preferred embodiment of an optical recording medium to which the method for recording and reproducing data according to the present invention can be applied. An optical recording medium is constituted by forming a first dielectric layer 31, a noble metal oxide layer 4, a second dielectric layer 32, a light absorption layer 5 and a third dielectric layer 33 on a substrate (not shown) in this order. The noble metal oxide layer 4 is constituted by AgOx wherein x is equal to 1, the light absorption layer 5 is constituted by an Ag-In-Sb-Te alloy and each of the first dielectric layer 31m the second dielectric layer 32 and the third dielectric layer 33 is constituted by $ZnS-SiO_2$. A laser beam for recording data or reproducing data is irradiated onto the noble metal oxide layer 4 and the light absorption layer 5 via the substrate.

A recording mark train whose pitch was 400 nm (mark length was 200 nm) was recorded on a particular track of the optical recording medium by irradiating the laser beam having a wavelength of 635 nm thereonto using an optical system having a numerical aperture NA of 0.60, thereby recording data therein. The power of the laser beam for recording data was modulated between a recording power level (10 mW) and a bias power level (1 mW). Namely, the recording power of the laser beam was set to 10 mW. Then, the data were reproduced using the laser beam whose readout power $Pr$ was set to 1 mW or 4 mW and a CNR of a reproduced signal was measured. As a result, in the case of setting the readout power $Pr$ to 1 mW, the CNR could not be measured but in the case of setting the readout power $Pr$ to 4 mW, the CNR was 41 dB and very high. In this case, since the resolution limit pitch is 530 nm and the resolution limit mark length is 265 nm, it can be seen understood that according to the present invention, it is possible to obtain a reproduced signal having a much higher CNR by utilizing the principle of the super-resolution reproduction than that in the conventional super-resolution reproduction method.

The optical recording medium shown in Figure 14A has the same configuration as that of the optical recording medium shown in Figure 1A except that a noble metal oxide layer 4 is constituted by PtOy wherein y is equal to 2. Data were recorded in the thus constituted optical recording medium under the same conditions as those used for recording data in the optical recording medium shown in Figure 1A except that the recording power level was set to 10.5 mW and a CNR of a reproduced signal was measured. As a result, although the CNR could not be measured in the case of setting the readout power $Pr$ to 1 mW, a reproduced signal having the CNR equal to or higher than 40 dB could be obtained in the case of setting the readout power $Pr$ to 4 mW.

A transmission electron microscope (TEM) photograph of the cross section of the optical recording medium shown in Figure 1A after reproducing data thereforom using the laser beam whose readout power was set to 1 mW is shown in Figure 1B. Further, a TEM photograph of the cross section of the optical recording medium after reproducing data therefrom using the laser beam whose readout power was set to 4 mW and then reproducing data therefrom using the laser beam whose readout power was set to 1 mW is shown in Figure 1C. Furthermore, a transmission electron microscope (TEM) photograph of the cross section of the optical recording medium shown in Figure 14A after reproducing data thereforom using the laser beam whose readout power was set to 1 mW is shown in Figure 14B. Moreover, a TEM photograph of the cross section of the optical recording medium after reproducing data therefrom using the laser beam whose readout power was set to 4 mW and then reproducing data therefrom using the laser beam whose readout power was set to 1 mW is shown in Figure 14C. Each of the cross sections shown in these Figures is substantially parallel with a recording track, namely, the recording mark train.

It can be clearly seen from Figure 1B that a void was formed by the irradiation with the laser beam for recording data at a region where the AgOx layer was present before recording data in the optical recording medium and that the shape of the cross-section of the void was periodically varied and the cycle of the variation in the shape of the void corresponded to the pitch of the arrangement of recording marks. Therefore, it is reasonable to conclude that a convex region (region formed with a relatively high void corresponds to a region (recording mark) irradiated with the laser beam whose power was set to the recording power level and a concave region (region formed with a relatively low void) corresponds to a region (space) irradiated with the laser beam whose power was set to the bias power level. Further, a few Ag particles 40 deposited into the each void. Furthermore, although the phase of the light absorption layer 5 was amorphous before recording data, the light absorption layer 5 was crystallized at a whole region of the track on which data were recorded after recording data.

It can be clearly seen from Figure 1C that the change in the contour of each void formed when data were recorded was not observed after reproducing data using the laser beam whose readout power was set to 4 mW but the number of the Ag particles 40 in each void notably increased. In other words, it can be seen that the Ag particles deposited by the irradiation with the laser beam for reproducing data. Here, although the Ag particles 40 were not uniformly distributed, the omission of a reproduced signal due to the unevenness of the distribution of the Ag particles was not observed.

On the other hand, it can be seen from Figures 14B and 14C that even in the case where the noble metal oxide layer 4 was constituted by PtOy, cavities corresponding to recording marks were formed in the noble metal oxide layer 4. Further, it can be seen that in these case, any void was not substantially formed at a region corresponding to the space and the contour of each void corresponding to the recording mark became clearer. Furthermore, it can be seen from Figures 14B and 14C that in the case where the noble metal oxide layer 4 was constituted by PtOy, the shape and particle size of each Pt particle and deposited density of the Pt particles were not readily changed even when data were reproduced using the laser beam whose readout power was set to a high power, namely, 4 mW.

Based on the above results, a recording mechanism of data will be considered below. When data are to be recorded in the optical recording medium, namely, the laser beam whose power is set to the recording power level is irradiated thereonto, AgOx is decomposed into Ag and $x/2*O_2$ in the noble metal oxide layer 4 constituted by AgOx, and the light absorption layer 5 is crystallized. The oxygen gas generated when data are to be recorded expands in the noble metal oxide layer 4, thereby deforming the noble metal oxide layer 4 and pushing the second dielectric layer 32 and the light absorption layer 5 up. Further, in the noble metal oxide layer 4 constituted by PtOy, similar decomposition occurs. As a result, the second dielectric layer 32 is curved so as to irradiat upward in Figures 14B and 14C at a region irradiated with the laser beam whose power is set to the recording power level and the light absorption layer 5 becomes thinner at a region irradiated with the laser beam whose power is set to the recording power level than that therearound, whereby the region serves as a recording mark. It can be considered that the oxygen gas is encapsulated in each void. In order to record data in the optical recording medium in accordance with this mechanism, it is necessary for the following two processes to be performed, namely, it is required that the noble metal oxide is decomposed into a noble metal and 02 and the oxygen gas generated by the decomposition of the noble metal oxide deforms the noble metal oxide layer 4, thereby deforming the second dielectric layer 32 and the light absorption layer 5. Since the light absorption layer 5 consisting of the typical phase change material is totally crystallized when data are to be recorded, this recording mechanism is different from a recording mechanism in the phase change type optical recording medium which detects a recording mark based on the difference in the reflectivity between the crystal phase and the amorphous phase.

Then, a reproducing mechanism of data will be considered below. It has become clear from Figure 1C that a number of Ag particles 40 deposit by using the principle of the super-resolution limit reproduction. As shown in Figure 1B, a part of Ag produced by the decomposition of AgOx into Ag and $x/2*O_2$ when data are to be recorded in the optical recording medium coheres to form Ag particles 40. Although it can not be confirmed from Figure 1B, it can be considered that Ag which have not cohered to form the Ag particles 40 is adhered to the wall surface of each void in forms of ultrafine particles. In this state, when the laser beam for reproducing data having a power equal to or higher than a predetermined level is irradiated onto the optical recording medium, ultrafine particles of Ag cohere and Ag particles each having a size observable using a TEM deposit. It can be considered that the thus deposited Ag particles become a probe which scatters near-field light and serve similarly to the Ag probe described in the above mentioned Jpn. J. Appl. Phys. Vol. 39 (2000) pp. 980 to 981 to convert near-field light into propagation light, thereby enabling data to be reproduced in accordance with the principle of the super-resolution limit reproduction.

In Figures 1B and 1C, since the recording mark length and the space length are 200 nm and short, the deformation of the noble metal oxide layer 4 due to the generation of the oxygen gas at the recording mark influences on the space, whereby a void is formed at a region corresponding to the space. However, when a recording mark train having a longer recording mark length the space length was recorded in the optical recording medium, it was found that no void was formed in the noble metal oxide layer 4 at the space and that the height of the void at the recording mark was constant.

In the present invention, noble metal particles once deposited into each void in the noble metal oxide layer 4 by the irradiation with the laser beam do not disappear after reproducing data. Therefore, it is unnecessary to further deposit noble metal oxide particles when data reproduction is repeated. However, since it was found that when the readout power of the laser beam was decreased to 1 mW after data had been reproduced using the laser beam having a readout power of 4 mW as shown in Figure 1C, a CNR could not be measured, it is necessary to irradiat a laser beam having such a power that data can be reproduced in accordance with the principle of super-resolution limit reproduction when data reproduction is repeated.

Here, it is not absolutely necessary to deposit noble metal particles by the irradiation with a laser beam for reproducing data and a laser beam may be irradiated onto the optical recording medium prior to reproducing data so as to deposit noble metal particles.

Further, in the examples shown in Figures 1B and 1C, although a few noble metal particles deposit when data are to be recorded, a larger amount of noble metal particles may be deposited when data are to be recorded. For example, as shown in Figures 14B and 14C, it is possible to deposit a large amount of noble metal particles when data are to be recorded so that the deposited density of noble metal particles is hardly changed when a laser beam is irradiated for the data reproduction or the like onto the optical recording medium thereafter. Further, the crystal structure and particle size of the noble metal particle deposited when data are to be recorded may be varied when a laser beam is irradiated for the data reproduction or the like onto the optical recording medium thereafter.

When data are to be recorded or data are to be reproduced utilizing the principle of the super-resolution limit, it is preferable to set the incident direction of a laser beam so that the laser beam transmitted through the noble metal oxide layer 4 is irradiated onto the light absorption layer 5. In the case of irradiating a laser beam onto the noble metal oxide layer 4 via the light absorption layer 5 consisting of metal and/or metalloid, since the laser beam is reflected from or absorbed in the light absorption layer 5, it is necessary to increase the power of the laser beam and there is a risk of the light absorption layer 5 being damaged. Further, in the case where the light absorption layer 5 is constituted by a phase change material, if a laser beam is directly irradiated onto the light absorption layer 5 without transmitting it through the noble metal oxide layer 4, a recording mark in an amorphous phase or crystalline phase is sometimes formed in the light absorption layer 5 without the formation of any recording mark in the noble metal oxide layer 4. In such a case, the recording and reproducing mechanism according to the present invention cannot operate.

Here, the present invention can be applied to an optical recording medium including no light absorption layer 5. In such a case, a laser beam may be irradiated form an either side of the optical recording medium when data are to be recorded or data are to be reproduced.

Each of Japanese Patent No. 3157019 and Japanese Patent No. 3071243 discloses an optical recording medium including a recording layer consisting of silver oxide and constituted so that the silver oxide is decomposed into Ag and $O_2$ by the irradiation with a laser beam for recording data, whereby cavities are formed in the recording layer. Each of these optical recording media is similar to the optical recording medium to which the present invention is applied in that cavities are formed in the silver oxide layer when data are to be recorded. However, they do not refer to the formation of a small recording mark having a size close to the resolution limit at all. Further, a laser beam having a wavelength of 780 nm and whose power is set to 0.5 mW is employed for reproducin data in Working Examples disclosed in each of these patents but since it is impossible to deposit Ag particles using the laser beam whose power is set to such a low level, data cannot be reproduced using the principle of the super-resolution limit reproduction.

When information is to be recorded in the optical recording medium, a laser beam whose power is modulated based on signals modulated by a data modulation code such as EFM or the like is irradiated onto the optical recording medium and a recording mark train including recording marks having various lengths on a recording track thereof. The present invention exhibits an excellent technical advantage that in the case of reproducing a recording mark having a size smaller than $0.25\lambda$ / NA, a reproduced signal having a high CNR can be obtained. Further, according to the present invention, in the case of reproducing a recording mark having a size larger than the resolution limit but close to the resolution limit, it is possible to improve a C/N ratio of a reproduced signal. According to the present invention, in the case of reproducing a recording mark having a length shorter than $0.37\lambda$ / NA, particularly, $0.28\lambda$ / NA, it is possible to markedly improve a C/N ratio of a reproduced signal. Therefore, the present invention is particularly effective in the case of forming a recording mark train including a recording mark having a such length.

Here, in the case where the length of a recording mark is too short, since it is difficult to obtain a reproduced signal having a high C/N ratio even if the present invention is applied, in the present invention, it is preferable to apply the present invention to the case of reproducing a recording mark train including a recording mark having a length equal to or shorter than $0.05\lambda$ / NA, particularly, $0.09\lambda$ / NA.

In the present invention, it is necessary to decompose a noble metal oxide, thereby forming cavities in the noble metal oxide layer and irreversibly deposit noble metal particles prior to reproducing data or at least when data are to be first reproduced. If the recording power and/or the readout power is too low, such a recording and reproducing mechanism does not function in a desired manner and a reproduced signal having a high CNR cannot be obtained. On the other hand, if the recording power and/or the readout power is too high, the durability of the optical recording medium may be adversely affected and damaged. Therefore, there are optimum values of the recording power and the readout power.

However, in the case where a laser beam having a short wavelength is irradiated onto the optical recording medium using an optical system having a large numerical aperture, since the energy density within a laser beam spot increases, even if the power of the laser beam is the same, different influences are exerted on the noble metal oxide layer by the laser beam when data are to be recorded or reproduced depending upon the wavelength of the laser beam and the numerical aperture of the optical system. Further, in the case where the compositions or thicknesses of the respective layers such as the noble metal oxide layer, the light absorption layer and the like for constituting the optical recording medium are different, even if the power of the laser beam is the same, different influences are exerted on the noble metal oxide layer thereby when data are to be recorded or reproduced.

Therefore, in the present invention, the recording power and the readout power of the laser beam may be experimentally determined so as to obtain a reproduced signal having a high CNR. In the present invention, it is preferable to obtain a reproduced signal having a CNR equal to or higher than 25 dB and more preferable to obtain a reproduced signal having a CNR equal to or higher than 40 dB.

An optical recording medium to which the method for recording and reproducing data according to the present invention can be applied will be explained in detail below.

## OPTICAL RECORDING MEDIUM HAVING A STRUCTURE SHOWN IN FIGURE 2

A preferred embodiment of an optical recording medium of the present invention is shown in Figure 2. The optical recording medium includes a first dielectric layer 31, a noble metal oxide layer 4, a second dielectric layer 32, a light absorption layer 5 and a third dielectric layer 33 on a substrate 2 in this order.

## NOBLE METAL OXIDE LAYER 4

Before recording data, the noble metal oxide layer 4 contains noble metal oxide and it is preferable for the noble metal oxide layer 4 to substantially consist of noble metal oxide.

The noble metal oxide layer 4 may contain two or more noble metal oxides. In such a case, the noble metal oxide layer may have a single layer structure or a multi-layered structure in which a plurality of layers each containing at least one noble metal oxide. However, in the case where the noble metal oxide layer contains two or more kinds of noble metal oxides, all of the two or more kinds of noble metal oxides sometimes are not decomposed at the same time when data are to be recorded and all of the two or more kinds of noble metal oxides sometimes do not coherent when data are to be reproduced, whereby the recording and reproducing characteristics are adversely affected. Therefore, it is preferable for the noble metal oxide layer to contain one kind of noble metal oxide.

The kind of noble metal usable in the present invention is not particularly limited since the above described recording and reproducing mechanism can operate irrespective of the kind of noble metal. However, it is preferable to use at least one kind of noble metal selected from a group consisting of platinum, silver and palladium from the viewpoint of easy forming oxide thereof, the stability of oxide thereof and the efficiency for generating near-field light using a visible light and it is more preferable to use silver and/or platinum. Further, it is particularly preferable to use platinum for obtaining a reproduced signal having a higher CNR and increasing the reproduction durability of a recording mark.

In the case where platinum oxide represented by $PtO_y$ is used, it is preferable for a value $y$ to satisfy the following relationship in order to reproduce a small recording mark to obtain a reproduced signal having a high CNR.

$$0.5 \leq y,\ \text{more preferably,}$$
$$1 \leq y$$

However, if the value $y$ is too large, since a CNR of a signal obtained by reproducing a recording mark having a length longer than the resolution limit becomes lower, it is preferable for the value $y$ to satisfy the following relationship in order to reproduce a recording mark train including recording marks having various lengths and obtain reproduced signals having high CNRs.

$$4 \leq y,\ \text{more preferably,}$$
$$y < 3$$

Further, the composition of $PtO_y$ influences on the reproduction durability of a recording mark. Therefore, it is preferable for the value $y$ to satisfy the following relationship in order to improve the reproduction durability of a recording mark having a length shorter than the resolution limit, in other words, prevent a CNR from being lowered when data are repeatedly reproduced.

$$1 \leq y$$

It is preferable for the value $y$ to satisfy the following relationship in order to improve the reproduction durability of a recording mark having a length longer than the resolution limit.

$$2 < y$$

in the case where silver represented by AgOx oxide is used, it is preferable for a value $x$ to satisfy the following relationship in order to reproduce a small recording mark to obtain a reproduced signal having a high CNR.

$$0.5 \leq x \leq 1.5,\ \text{more preferably,}$$
$$0.5 \leq x \leq 1$$

Since it is difficult to obtain a reproduced signal having a high CNR, if the value $x$ is too small and on the other hand, AgOx becomes unstable, if the value $x$ is too large, storage durability and the reproduction durability of a recording mark tend to be lowered.

In the case where palladium oxide represented by $PdO_z$ is used, it is preferable for a value $z$ to satisfy the following relationship in order to reproduce a small recording mark to obtain a reproduced signal having a high CNR.

$$1.0 \leq z \leq 1.5$$

If the value $z$ is too small, it is difficult to obtain a reproduced signal having a high CNR. On the other hand, if the value z exceeds 1.5, it is difficult to form a palladium oxide layer in view of the film forming process.

The composition of the noble metal oxide layer 4 can be measured using fluorescence X-ray analysis, for example.

The thickness of the noble metal oxide layer 4 is preferably 1 to 30 nm, more preferably, 2 to 20 nm. In the case where the noble metal oxide layer 4 is too thin, it is difficult to form the noble metal oxide layer 4 as a continuous film and to obtain stable recording and reproducing characteristics. On the other hand, in the case where the noble metal oxide layer 4 is too thick, it is impossible to obtain a reproduced signal having a high CNR.

An optical recording medium having a structure (shown in Figure 5) obtained by removing the light absorption layer 5 from the optical recording medium shown in Figure 2 falls with the scope of the present invention. In the optical recording medium having such a structure, the temperature of the noble metal oxide layer 4 does not readily increase when a laser beam is irradiated thereonto and as a result, it is difficult to obtain a reproduced signal having a sufficiently high CNR. Therefore, it is preferable to make the noble metal oxide layer 4 thicker and increase light absorption coefficient in the optical recording medium including no light absorption layer 5. The thickness of the noble metal oxide layer 4 of the optical recording medium having such a structure is preferably 20 to 100 nm. In this case, if the noble metal oxide layer 4 is too thick, the noble metal oxide layer 4 becomes unstable and the reproduction durability of a recording mark tends to be lowered.

A process for forming the noble metal oxide layer 4 is not particularly limited and the noble metal oxide layer 4 can be formed using a physical vapor deposition (PVD) process such as the sputtering process, vapor deposition process or the like or the chemical vapor deposition (CVD) process. Among these, it is preferable to form the noble metal oxide layer 4 by the reactive sputtering process using a noble metal target and oxygen gas as a reaction gas.

## LIGHT ABSORPTION LAYER 5

The light absorption layer 5 serves to absorb a laser beam when data are to be reproduced and be heated, thereby heating the noble metal oxide layer 4 adjacent therewith and facilitating the deposition of a noble metal. Since the noble metal oxide layer 4 has high transparency with respect to a laser beam for recording data or reproducing data and is not readily heated, it is difficult to obtain a reproduced signal having a sufficiently high CNR unless the light absorption layer is provided.

The light absorption layer 5 is constituted so as to be readily heated by the irradiation with a laser beam. This can be achieved by increase an absorption coefficient of the light absorption layer 5 or lowering thermal coefficient of the light absorption layer 5. Further, in the present invention, since it is necessary to form cavities in accordance with above described mechanism, thereby forming a recording mark, it is preferable for the light absorption layer 5 to be easily deformed in order to easily form cavities.

As the material usable for forming the light absorption layer 5, it is preferable to use a material containing metal or alloy (including a intermetallic compound) containing at least one element or two or more elements selected from a group consisting of metal and metalloid as a primary component and is particularly preferable to use an alloy containing at least Sb and/or Te since the above characteristics of the light absorption layer 5 can be easily achieved in the case of forming the light absorption layer 5 of such an alloy.

The alloy containing at least Sb and/or Te has preferably a composition represented by the following formula..

$$\text{Formula I: } (Sb_aTe_{1-a})_{1-b}M_b$$

In the formula I, the element M represents an element other than Sb and Te and each of *a* and *b* represents an atomic ratio. Preferably, *a* and *b* are:

$0 \leq a \leq 1$,

$0 \leq b \leq 0.25$

In the case where *b* representing the content of the element M is too large, the above mentioned characteristics required for the light absorption layer 5 tend to become insufficient. The element M is not particularly limited but it is preferable for the element M to be at least one element selected from a group consisting of In, Ag, Au, Bi, Se, Al, P, Ge, H, Si, C, V, W, Ta, Zn, Ti, Sn, Pb, Pd and rare earth elements (Sc, Y and lanthanoid).

An alloy known as a phase change recording material is included in the alloy having the composition represented by the formula I. The phase change recording material is an alloy used as a recording material of an optical recording medium constituted so that a recording mark in an amorphous phase or crystalline phase is read utilizing the difference in the reflectivity between the phase change recording material in a crystalline phase and that in amorphous phase. However, the light absorption layer 5 is not used as a phase change type recording layer utilizing the difference in the reflectivity between the phase change recording material in a crystalline phase and that in amorphous phase.

In the case where the light absorption layer 5 is constituted by a phase change recording material and is in an amorphous phase, when only short recording marks are recorded in the noble metal oxide layer 4, since the light absorption layer 5 is continuously crystallized in a direction of the recording track when data are to be recorded due to heat diffusion into the surface of the light absorption layer 5, in other words, the light absorption layer 5 is crystallized between spaces, no problem occurs when data are to be reproduced. However, when longer spaces are formed in the noble metal oxide layer 4, the light absorption layer 5 sometimes remains to be amorphous in the vicinity of the center of the space. Since the region of the light absorption layer 5 remaining to be amorphous is sometimes crystallized when data are to be reproduced, a reproduced signal is sometimes distorted due to the crystallization of the region.

In order to prevent a reproduced signal from being distorted due to the light absorption layer 5 remaining to be amorphous, it is preferable to crystallize the whole region of the light absorption layer 5 prior to recording data in the noble metal oxide layer 4. It is possible to crystallize the whole region of the light absorption layer 5 by irradiating a laser beam thereonto similarly to the crystallizing operation of the whole surface of a recording layer in a phase change type optical recording medium. However, when the whole region of the light absorption layer 5 is to be crystallized, it is necessary to set processing conditions in a such a manner that noble metal oxide is not decomposed in the noble metal oxide layer 4.

Since it is difficult to ensure a sufficient light absorption coefficient in the case where the light absorption layer 5 is too thin and the light absorption layer 5 is not readily deformed in the case where it is too thick, it is preferable to form the light absorption layer 5 so as to have a thickness of 2 to 200 nm and more preferable to form it so as to have a thickness of 10 to 100 nm.

The process for forming the light absorption layer 5 is not particularly limited and the light absorption layer 5 can be formed by the above mentioned PVD process or CVD process.

## DIELECTRIC LAYERS 31, 32, 33

The first dielectric layer 31 is provided for transferring heat transferred from the noble metal oxide layer 4 when data are to be recorded or reproduced in the plane thereof, thereby protecting the substrate 2 and controlling the reflectivity of the optical recording medium. The second dielectric layer 32 is provided for improving a CNR of reproduced signal and protecting the noble metal oxide layer 4. The third dielectric layer 33 is provided for protecting the light absorption layer 5. Since it is required for the second dielectric layer 32 to be deformed in response to the formation of cavities in the noble metal oxide layer 4 when data are to be recorded, it is preferable to form the second dielectric layer 32 so as to be easily deformed.

The thickness of each of the first dielectric layer 31, the second dielectric layer 32 and the third dielectric layer 33 may be properly determined so as to carry out the function thereof. The first dielectric layer 31 is preferably formed so as to have a thickness of 10 nm to 300 nm, the second dielectric layer 32 is preferably formed so as to have a thickness equal to or larger than 5 nm and smaller than 100 nm, more preferably formed so as to have a thickness of 10 nm to 60 nm and the third dielectric layer 33 is preferably formed so as to have a thickness of 10 nm to 200 nm. In the case where the second dielectric layer 32 is too thick or too thin, the CNR of a reproduced signal obtained in accordance with the principle of the super-resolution limit reproduction becomes lower.

As the dielectric material usable for forming each of the first dielectric layer 31, the second dielectric layer 32 and the third dielectric layer 33, it is preferable to use a compound containing at least one metal or metalloid selected from Si, Ge, Zn, Al, rare earth elements and the like. As the compound, oxide, nitride or sulfide is preferable and a mixture containing two or more of these compounds may be used. However, in order to form the second dielectric layer 32 so as to be easily deformed, nitride such as silicon nitride is not preferable for forming the second dielectric layer 32.

A protective layer made of resin may be formed on the surface of the third dielectric layer 33 for protecting the optical recording medium. Further, in the case where the light absorption layer 5 is constituted by a phase change material, it is preferable to provide the third dielectric layer 33. However, it is not absolutely necessary to provide the third dielectric layer 33 and a protective layer made of resin may be formed so as to be in contact with the light absorption layer 5.

The process for forming each of the first dielectric layer 31, the second dielectric layer 32 and the third dielectric layer 33 is not particularly limited and they can be formed by the above mentioned PVD process or CVD process.

## SUBSTRATE 2

The substrate 2 is provided for ensuring the rigidity of the optical recording medium. The thickness of the substrate 2 is normally 0.2 to 1.2 mm, preferably, 0.4 to 1.2 mm. The substrate 2 is normally formed with a groove (guide groove) for tracking.

In the present invention, the layers from the first dielectric layer 31 to the third dielectric layer 33 may be laminated on the substrate in the reverse order to that shown in Figure 2.

In the case of irradiat a laser beam from the side of the substrate 2, the substrate 2 is formed of a light transmissible material. The material for forming the substrate 2 can be selected from various materials such as resin, glass, metal, ceramic and the like in accordance with the rigidity, transparency or the like required for the substrate 2.

## OPTICAL RECORDING MEDIUM HAVING A STRUCTURE SHOWN IN FIGURE 3

An optical recording medium shown in Figure 3 has such a structure that a reflective layer 6 is formed on the third dielectric layer 33 of the optical recording medium shown in Figure 2. In the case where a reflective layer 6 is provided, a laser beam for recording or reproducing data is impinged on the optical recording medium from the lower side in Figure 3.

It is possible to increase reproduction output of a recording mark having a length longer than the resolution limit by providing a reflective layer 6. in an optical recording medium provided with no reflective layer 6, all light passing through the interface between the light absorption layer 5 and the third dielectric layer 33 is transmitted through the optical recording medium toward the outside thereof. Therefore, in the case of reading a recording mark by detecting light transmitted through the optical recording medium without utilizing near-field light, namely, in the case of a recording mark normally reproduced without utilizing the principle of the super-resolution limit reproduction, a CNR of a reproduced signal cannot be increased. To the contrary, in the case where a reflective layer 6 is provided, since the interference effect between light reflected from the interface between the third dielectric layer 33 and the reflective layer 6 and light reflected from other interface can be utilized, it can be considered that it is possible to increase a CNR of a signal obtained by reproducing a recording mark having a size which can be reproduced by detecting light transmitted through the optical recording medium.

However, if the reflective layer 6 is formed to be thicker, since the intensity of light reflected from the reflective layer 6, thereby passing through the optical recording medium and returning to an optical pick up becomes higher and the intensity of light converted from near-field light in the noble metal oxide layer 4, passing through the optical recording medium and returning to the optical pick up becomes relatively lower, a CNR of a reproduced signal obtained by reproducing a small recording mark to be reproduced in accordance with the principle of the super-resolution limit reproduction becomes lower. Therefore, it is preferable to set the thickness of the reflective layer 6 so as to obtain a reproduced signal having a sufficiently high CNR from each of a large recording mark and a small recording mark. Concretely, the thickness of the reflective layer 6 can be experimentally determined in accordance with the material forming the reflective layer 6 but it is preferable to set the thickness of the reflective layer 6 to be 1 to 100 nm and particularly preferable to set it to be 2 to 15 nm.

The reflective layer 6 can be formed of a simple substance of metal or metalloid of Al, Au, Ag, Pt, Cu, Ni, Cr, Ti, Si or the like, or an alloy containing two or more kinds of the abovementioned metals or metalloid.

The process for forming the reflective layer 6 is not particularly limited and the reflective layer 6 can be formed by the above mentioned PVD process or CVD process.

## OPTICAL RECORDING MEDIUM HAVING A STRUCTURE SHOWN IN FIGURE 4

An optical recording medium shown in Figure 4 has such a structure that a precipitation activating layer 7 is formed between the first dielectric layer 31 and the noble metal oxide layer 4 of the optical recording medium shown in Figure 2.

The deposition temperature of a noble metal oxide particle varies depending upon the material forming of a layer in contact with the noble metal oxide layer 4. On the other hand, from the view posing of the reproduction durability, it is preferable to set the power of a laser beam for reproducing data in accordance with the principle of the super-resolution limit reproduction so as to be lower. Therefore, it is preferable to provide a layer for serving to lower the deposition temperature of a noble metal oxide particle so as to be in contact with the noble metal oxide layer 4. This layer is preferably formed so as to have such a thickness that a total design of the optical recording medium and a thermal balance thereof are not damaged. The precipitation activating layer 7 is a layer serving to improve the reproduction sensitivity in this manner and by providing the precipitation activating layer 7, it is possible to obtain a reproduced signal having a high CNR using a laser beam having a lower readout power than that used in the case of providing no precipitation activating layer 7.

It is preferable to form the precipitation activating layer 7 of silicon nitride and so as to have a thickness of 2 to 20 nm, for example.

The process for forming the precipitation activating layer 7 is not particularly limited and the precipitation activating layer 7 can be formed by the above mentioned PVD process or CVD process.

The reflective layer 6 shown in Figure 3 and the precipitation activating layer 7 may be provided together.

## OPTICAL RECORDING MEDIUM HAVING A STRUCTURE SHOWN IN FIGURE 5

An optical recording medium shown in Figure 5 has such a structure that the light absorption layer 5 and the third dielectric layer 33 are removed from the optical recording medium shown in Figure 2.

In the optical recording medium, data can be reproduced in accordance with the principle of the super-resolution limit reproduction and it is possible to improve the reproduction durability but it is difficult to obtain a reproduced signal having a high CNR.

## WORKING EXAMPLES

In Working Examples described below, optical recording disc samples were evaluated using an optical recording disc evaluating apparatus "DDU1000" manufactured by Pulstec Industrial Co., Ltd. in which a low resolution pick up (the resolution limit pitch was 530 nm and the resolution limit length was 265 nm) constituted so that a laser beam having a wavelength $\lambda$ of 635 nm was emitted from an optical system having a numerical aperture of 0.60 and a high low resolution pick up (the resolution limit pitch was 312 nm and the resolution limit length was 156 nm) constituted so that a laser beam having a wavelength $\lambda$ of 405 nm was emitted from an optical system having a numerical aperture of 0.65 were provided so as to face each other. A linear recording velocity used when data were to be recorded or data were to be reproduced was 6 m/sec.

In this optical recording disc evaluating apparatus, a laser beam emitted from the low resolution pick up enters the noble metal oxide layer 4 from the side of the substrate and a laser beam emitted from the high resolution pick up enters the noble metal oxide layer 4 from the side opposite to of the substrate. Therefore, according to this optical recording disc evaluating apparatus, a recording mark train recorded in the noble metal oxide layer 4 can be reproduced by the two pick ups having different resolutions. For example, in the case of reproducing a recording mark train including recording marks whose pitch is 400 nm and each having a length of 200 nm using the low resolution pick up using the laser beam having a wavelength $\lambda$ of 635 nm and the optical system having a numerical aperture of 0.60, data are reproduced in accordance with the principle of the super-resolution reproduction and on the other hand, in the case of reproducing the recording mark train using the high resolution pick up using the laser beam having a wavelength $\lambda$ of 405 nm and the optical system having a numerical aperture of 0.65, data are reproduced in a normal a manner.

Accordingly, in the case where a CNR cannot be measured even if the both pick ups, it can be considered that a readable reproducing mark train is not formed. Further, in the case where a CNR decreases by repeatedly reproducing data, it means that a recording mark disappears by repeatedly reproducing data. Moreover, although data can be reproduced using the high resolution pick up in a normal manner, in the case where a reproducing mark having a size which cannot be reproduced only in accordance with the principle of the resolution limit reproduction when the low resolution pick us is used are to be reproduced, when a CNR cannot be measured only in the case of reproducing the recording mark using the low resolution pick up in accordance with the principle of the resolution limit reproduction, the existing recording mark cannot be reproduced in accordance with the principle of the super-resolution limit reproduction mechanism.

In Working Examples described below, data were recorded using the low resolution pick up unless otherwise noted.

WORKING EXAMPLE 1-1 (The optical recording medium having the structure shown in Figure 2 and the noble metal oxide layer containing AgOx)

As shown in Figure 2, an optical recording disc sample having a multi-layered structure of a substrate 2, a first dielectric layer 31, a noble metal oxide layer 4, a second dielectric layer 32, a light absorption layer 5 and a third dielectric layer was fabricated. More specifically, a polycarbonate substrate (0.6 mm), a $ZnS-SiO_2$ layer (130 nm), a $ZnS-SiO_2$ layer (40 nm), an Ag-In-Sb-Te layer (60 nm) and a $ZnS-SiO_2$ layer (100 nm) were formed, wherein thicknesses are shown in the parentheses. Each of the $ZnS-SiO_2$ layers was formed by the sputtering process using a target having a composition represented by a mole ratio of $(ZnS)_{85}(SiO_2)_{15}$ in an atmosphere of an Ar gas. The AgOx layer was formed by the sputtering process using an Ag target in an atmosphere of a mixed gas of Ar flowing at a flow rate of 10 sccm and $O_2$ flowing at a flow rate of 10 sccm. The value $x$ of the thus formed AgOx was equal to 1. The Ag-In-Sb-Te layer was formed by the sputtering process using a target of $Ag_{6.0}In_{4.5}Sb_{60.8}Te_{28.7}$ (mole %) in an Ar gas.

The thus fabricated sample was rotated at a linear velocity of 6 m/sec and a laser beam having a power of 1.2 mW was continuously irradiated using the low resolution pick up onto a recording track of the sample for three seconds, thereby crystallizing the light absorption layer 5. Here, in Working Examples described below, the light absorption layer 5 was crystallized prior to the evaluating the recording and reproducing characteristics unless otherwise noted.

Recording mark trains whose pitches were 200 nm to 1.6 $\mu$m (mark lengths were 100 to 800 nm) were recorded in the sample using the laser beam whose recording power was set to 10 mW. Then, the thus recording mark trains were reproduced using the low resolution pick up and the laser beam whose readout power was set to 1 mW or 4 mW and a CNR of each reproduced signals was measured. The results of the measurement are shown in Figure 6.

It can be seen from Figure 6 that in the case where the recording power of the laser beam was set to 4 mW when the recording mark train including a recording mark having a length shorter than 400 nm ($0.37\lambda$ / NA) were reproduced, the CNR of a reproduced signal was markedly increased. In particular, when the recording mark train including a recording mark having a length of 200 nm was reproduced, a high CNR of 41 dB was measured.

Here, in the case where the light absorption layer had a composition (mole ratio) of $Ge_2Sb_2Te_5$ or $(Sb_{0.7}Te_{0.3})_{0.95}Ge_{0.05}$, substantially the same results were obtained.

The TEM photographs shown in Figures 1B and 1C are photographs of cross sections of the samples obtained by recording and reproducing recording mark trains under the same conditions as those in this Working Example 1-1 except that the light absorption layer 5 was not crystallized prior to the recording the recording mark trains.

COMPARATIVE EXAMPLE 1 (The optical recording medium having the structure shown in Figure 2 and phase change type recording on the light absorption layer 5)

The sample was fabricated in the same manner as that in Working Example 1-1. However, the light absorption layer 5 was not crystallized.

A laser beam was irradiated using the high resolution pick up onto the sample from the side of the third dielectric layer 33, thereby recording a recording mark train whose pitch was 400 nm (mark lengths were 200 nm) with the recording power of 6 mW and the recording mark train was reproduced using the high resolution pick up and the laser beam whose readout power was set to 0.7 mW. As a result, a reproduced signal having a CNR of 44 dB was obtained.

Then, the recording mark train was continuously reproduced using the low resolution pick up and the laser beam whose power was set to 4 mW. As a result, a reproduced signal having a CNR of 22 dB at an initial stage but a reproduced signal disappeared within several seconds. Thereafter, although the recording mark train was reproduced using the high resolution pick up and the laser beam whose readout power was set to 0.7 mW, a CNR of a reproduced signal could not be measured.

Since the recording mark train disappeared when the laser beam whose power was set to 4 mW was continuously irradiated, it can be considered that a crystalline recording mark was formed in an amorphous light absorption layer in the principle of the phase change recording in Comparative Example 1 and that Ag particles were deposited in the noble metal oxide layer 4 by the low resolution pick up, thereby reproducing the recording mark train in accordance with the principle of the super-resolution limit reproduction. In other words, the recording and reproducing method in Comparative Example 1 is similar to that disclosed in Jpn. J. Appl. Phys. Vol. 39 (2000) pp. 980 to 981 in that the phase change type recording was effected. As apparent from the comparison of Comparative Example 1 and Working Example 1-1, in the case where the phase change type recording was effected, a CNR of a reproduced signal was low and the reproduction durability was poor.

WORKING EXAMPLE 1-2 (The optical recording medium having the structure shown in Figure 2 and the noble metal oxide layer containing PtOy)

A sample was fabricated in the same manner as that in Working Example 1-1 except that the noble metal oxide layer 4 having a thickness of 4 nm was formed of PtOy. The PtOy layer was formed by the sputtering process using an Pt target in an atmosphere of a mixed gas of Ar flowing at a flow rate of 5 sccm and $O_2$ flowing at a flow rate of 5 sccm. The value $y$ of the thus formed PtOy was equal to 2.

Recording mark trains whose pitches were 160 nm to 1.6 μm (mark lengths were 80 to 800 nm) were recorded in the sample using the laser beam whose recording power was set to 14 mW. Then, the thus recording mark trains were reproduced using the low resolution pick up and the laser beam whose readout power was set to 1 mW or 4 mW. The results of the reproduction of data are shown in Figure 7.

In Figure 7, in the case where the readout power Pr was 1 mW, when the mark length became smaller than 400 nm (0.37λ / NA), the CNR abruptly decreased and a CNR could not be measured from the recording mark having a length of 200 nm smaller than the resolution limit. To the contrary, in the case where the readout power $Pr$ was 4 mW, a reproduced signal having a sufficiently high CNR could be obtained even from the recording mark small enough to be reproduced in accordance with the principle of the super-resolution limit reproduction. Concretely, it was possible to obtain a reproduced signal having a CNR higher than 40 dB from each of recording marks having lengths larger than 150 nm.

Comparing Figure 6 in which the noble metal oxide layer 4 was formed of AgOx and Figure 7 in which the noble metal oxide layer 4 was formed of PtOy, in the case where the readout power Pr was 4 mW in which data could be reproduced in accordance with the principle of the super-resolution limit reproduction, a CNR of the reproduced signal obtained in Figure 7 was higher than that obtained in Figure 6 for each of all recording marks having various lengths. Therefore, platinum oxide is preferable as a noble metal oxide for forming the noble metal oxide layer 4.

The TEM photographs shown in Figures 14A, 14B and 14C are photographs of cross sections of the samples obtained by recording and reproducing recording mark trains under the same conditions as those in this Working Example 1-2 except that the light absorption layer 5 was not crystallized prior to the recording the recording mark trains.

WORKING EXAMPLE 1-3 (The optical recording medium having the structure shown in Figure 2 and the noble metal oxide layer containing PdOz)

A sample was fabricated in the same manner as that in Working Example 1-1 except that the noble metal oxide layer 4 having a thickness of 4 nm was formed of PdOz. The PdOz layer was formed by the sputtering process using an Pd target in an atmosphere of a mixed gas of Ar flowing at a flow rate of 5 sccm and $O_2$ flowing at a flow rate of 5 sccm. The value $z$ of the thus formed PdOz was equal to 1.10.

Recording mark trains whose pitches were 100 nm to 800 nm (mark lengths were 50 to 400 nm) were recorded in the sample by using the same optical system as that of the high resolution pick up and irradiating the laser beam whose recording power was set to 11 mW onto the sample from the side of the substrate, and the recording marks were reproduced by using the high resolution pick up by irradiating the laser beam whose readout power was set to 1 mW or 4 mW onto the sample from the side of the substrate. The results the reproduction are shown in Figure 15.

In Figure 15, in the case where the readout power $Pr$ was 1 mW, when the mark length became smaller than 200 nm, the CNR abruptly decreased and a CNR could not substantially be measured from the recording mark having a length of 150 nm smaller than the resolution limit. To the contrary, in the case where the readout power $Pr$ was 4 mW, a reproduced signal having a sufficiently high CNR could be obtained even from the recording mark small enough to be reproduced in accordance with the principle of the super-resolution limit reproduction. Concretely, it was possible to obtain a reproduced signal having a CNR higher than 35 dB from each of recording marks having lengths larger than 100 nm.

Here, when data were recorded and reproduced in the same sample by using the low resolution pick up and setting the recording power of a laser beam to 12 mW and the readout power thereof to 4 mW, a CNR of a signal obtained by reproducing the recording mark having a size smaller than 200 nm was 42 dB.

WORKING EXAMPLE 1-4 (The optical recording medium having the structure shown in Figure 2 and comparison based on the difference in the oxygen contents in the PtOy layer)

A plurality of samples including the PtOy layers whose $y$ values were different from each other were fabricated by controlling the ratio of the flow rates Ar/O$_2$ when forming the PtOy layer of the optical recording medium of Working Example 1-2. The $y$ value and the ratio of the flow rates (sccm) in each sample were:

$$y = 0 : Ar/O_2 = 10/0,$$

$$y = 0.75 : Ar/O_2 = 7.5/2.5,$$

$$y = 2 : Ar/O_2 = 5.0/5.0,$$

$$y = 3 : Ar/O_2 = 2.5/7.5$$

Recording mark trains whose pitches were 160 nm to 1.6 μm (mark lengths were 80 to 800 nm) were recorded in the sample using the laser beams whose powers were set to their optimum powers, and the recording mark trains were reproduced using the low resolution pick up and the laser beam whose readout power was set to 4 mW. The results of the reproduction of data are shown in Figure 8.

Further, the variation of CNRs when the recording mark train whose pitch was 400 nm (mark length was 200 nm) and the recording mark train whose pitch was 1.6 λm (mark length was 800 nm) were repeatedly reproduced are shown in Figures 9 and 10. It can be seen from Figures 9 and 10 that it is preferable to increase the $y$ value in order to improve the reproduction durability of each of recording marks having various lengths.

WORKING EXAMPLE 1-5 (The optical recording medium having the structure shown in Figure 2 and comparison based on the difference in the oxygen contents in the PdOz layer)

A plurality of samples including the PdOz layers whose $z$ values were different from each other were fabricated by controlling the ratio of the flow rates Ar/O$_2$ when forming the PdOz layer of the optical recording medium of Working Example 1-2. The $z$ value and the ratio of the flow rates (sccm) in each sample were:

$$y = 0.82 : Ar/O_2 = 8.5/1.5,$$

$$y = 1.10 : Ar/O_2 = 5.0/5.0,$$

$$y = 1.12 : Ar/O_2 = 1.0/9.0$$

Recording mark trains whose pitches were 200 nm to 600 nm (mark lengths were 100 to 300 nm) were recorded in the sample using the high resolution pick up and the laser beams whose powers were set to their optimum powers, and the recording mark trains were reproduced using the high resolution pick up and the laser beam whose readout power was set to 4 mW. The results of the reproduction of data are shown in Figure 16.

It can be seen from Figure 16 that it is preferable to set the $z$ value to be equal to or smaller than 1.0 in order to obtain a reproduced signal having a high CNR from a recording mark having a size smaller than the resolution limit. Further, it was found that the upper limit of the $z$ value was not particular limited but that even when the content of oxygen in the ambient gas was extremely increased when forming the layers, it was difficult to obtain the palladium oxide layer wherein the $z$ value was larger than 1.5.

WORKING EXAMPLE 1-6 (The optical recording medium having the structure shown in Figure 2 and comparison of the PtOy layer and the PdOz layer)

The recording mark train whose pitch was 400 nm (mark length was 200 nm) and the recording mark train whose pitch was 1.6 μm (mark length was 800 nm) recorded in the sample fabricated in Working Example 1-1 and including the AgOx layer wherein the $x$ value was 1 and a sample fabricated in the same manner as that in Working Example 1-4 except that a PtOy layer wherein the $y$ value was 3 was formed so as to have a thickness of 8 nm were repeatedly reproduced using the low resolution pick up and the laser beam whose readout power was set to 4 mW and the variation of CNRs was measured the results of the measurement are shown in Figure 11.

It can be seen from Figure 11 that the reproduction durability was markedly improved in the sample including the PtOy layer as the noble metal oxide layer 4. It can be considered that this was because the shape and size of the noble metal particle deposited when data were reproduced do not readily fluctuate and was stable even in the case where data were repeatedly reproduced using the laser beam whose power was set high.

WORKING EXAMPLE 1-7 (The optical recording medium having the structure shown in Figure 2 and comparison based on the thickness of the PtOy layer)

Samples were fabricated in the same manner as that in Working Example 1-4 except that a noble metal oxide layer 4 consisting of PtOy of each sample was formed so that the $y$ value became 3 and the thickness of the noble metal oxide layer 4 was varied within a range of 4 to 30 nm. A recording mark train whose pitch was 400 nm (mark length was 200 nm) was recorded in each of the thus fabricated samples under the optimum conditions thereof. Then, the recording mark train was reproduced using the low resolution pick up and the laser beam whose readout power was set to 4 mW and a CNR of a reproduced signal obtained from each sample was measured. The relationship between the thickness of the PtOy layer of each sample and a CNR in terms of thickness: CNR was as follows.

    4 nm : 44 dB,
    8 nm : 41 dB,
    12 nm: 30 dB,
    16 nm : 29 dB,
    18 nm : 28 dB,
    30 nm : 27 dB

WORKING EXAMPLE 1-8 (The optical recording medium having the structure shown in Figure 2 and comparison based on the thickness of the PdOz layer)

Samples were fabricated in the same manner as that in Working Example 1-5 except that a noble metal oxide layer 4 consisting of PdOz of each sample was formed so that the $z$ value became 1.1 and the thickness of the noble metal oxide layer 4 was varied within a range of 2 to 15 nm. A recording mark train whose pitch was 300 nm (mark length was 150 nm) was recorded in each of the thus fabricated samples using the high resolution pick up under the optimum conditions thereof. Then, the recording mark train was reproduced using the high resolution pick up and the laser beam whose readout power was set to 4 mW and a CNR of a reproduced signal obtained from each sample was measured. The relationship between the thickness of the PdOz layer of each sample and a CNR in terms of thickness: CNR was as follows.

    2 nm : 26 dB,
    4 nm : 35 dB,
    10 nm: 32 dB,
    15 nm : 26 dB,

WORKING EXAMPLE 1-9 (The optical recording medium having the structure shown in Figure 2 and comparison based on the material for forming the light absorption layer 5)

A recording mark train whose pitch was 400 nm (mark length was 200 nm) was recorded using the laser beam whose recording power was set to 9 mW in samples fabricated in the same manner as that in Working Example 1-1 except that a light absorption layer 5 was formed of Si, Au or W and the recording mark train was reproduced using the low resolution pick up and the laser beam whose readout power was set to 4 mW. As a result, the relationship between the material of the light absorption layer 5 and a CNR was as follows.

    Si : 19 dB,
    Au : 20 dB,
    W : 24 dB

These results indicate that the super-resolution limit reproduction characteristics become worse in the case of employing Au, Si or W as the material for forming the light absorption layer 5 than those in the case of employing a phase change material as the material for forming the light absorption layer 5. Since the absorption coefficient of AgOx itself constituting the noble metal oxide layer 4 is low, the temperature of the light absorption layer 5 is not sufficiently increased under the conditions of this Working Example and is not decomposed when data are to be recorded. Therefore, it is necessary to provide a proper light absorption layer. It can be considered that the reason why sufficient characteristics could not be obtained was that in the case where the light absorption layer 5 was constituted by Au, the thermal conductivity of Au was high and heat was not readily transmitted to the AgOx layer and that in the case where the light absorption layer 5 was constituted by Si, the absorption coefficient of Si was low and the light absorption layer 5 did not sufficiently function. Further, it can be considered that in the case where the light absorption layer 5 was constituted by W, although the light absorption layer 5 functioned as a layer for absorbing light and being heated, since W was a hard material, it was prevented from forming cavities in the noble metal oxide layer 4 when data were to be recorded.

WORKING EXAMPLE 1-10 (The optical recording medium having the structure shown in Figure 2 and comparison based on the material for forming the second dielectric layer 32)

A recording mark train whose pitch was 400 nm (mark length was 200 nm) was recorded using the laser beam whose recording power was set to 14 mW in a sample fabricated in the same manner as that in Working Example 1-1 except that a second dielectric layer 32 was formed of silicon nitride, and the recording mark train was reproduced using the low resolution pick up and the laser beam whose readout power was set to 4 mW. As a result, a CNR of a reproduced signal could not be measured.

Further, when the recording mark train was reproduced using the high resolution pick up and the laser beam whose readout power was set to 0.7 mW, a CNR of a reproduced signal could not be measured. In other words, data could not be reproduced by a normal reproduction method.

Since data could not be reproduced by a normal reproduction method in this manner, it can be seen that in the case where the second dielectric layer 32 was formed of silicon nitride, it was impossible to form a readable recording mark. It can be considered that since silicon nitride was a material much harder than $ZnS$-$SiO_2$ used in Working Example 1-1, the oxygen gas generated by the decomposition of AgOx could not form any void serving as a recording mark in the noble metal oxide layer 4.

WORKING EXAMPLE 1-11 (The optical recording medium having the structure shown in Figure 2 and comparison based on the thickness of the second dielectric layer 32)

A sample was fabricated in the same manner as that in Working Example 1-1 except that a second dielectric layer 32 was formed so as to have a thickness of 100 nm. A recording mark train whose pitch was 400 nm (mark length was 200 nm) was recorded using the laser beam whose recording power was set to 11 mW in the sample, and the recording mark train was reproduced using the low resolution pick up and the laser beam whose readout power was set to 4 mW. As a result, a CNR of a reproduced signal could not be measured.

Further, when the recording mark train was reproduced using the high resolution pick up and the laser beam whose readout power was set to 0.7 mW immediately after the recording mark train had been formed and after the recording mark train was reproduced using the low resolution pick up and the laser beam whose readout power was set to 4 mW, a reproduced signal having a CNR of 40 dB was obtained in each case.

WORKING EXAMPLE 2-1 (The optical recording medium having the structure shown in Figure 3 and the effect of the reflective layer 6)

Samples each having a structure shown in Figure 3 were fabricated by forming a Ag layer or Al layer having a thickness of 10 nm as a reflective layer 6 on the third dielectric layer 33 of the optical recording disc sample fabricated in Working Example 1-1. The Ag layer or the Al layer was formed by the sputtering process using an Ag target or an Al target in an ambient gas of Ar.

Recording mark trains whose pitches were 400 nm to 1.6μm (mark lengths were 200 to 800 nm) were recorded in each sample using the laser beam whose recording power was set to 10 mW, and the recording mark trains were reproduced using the low resolution pick up and the laser beam whose readout power was set to 4 mW. The results of reproduction of the recording mark trains are shown in Figure 12. Here, the results of reproduction of the recording mark trains from a sample provided with no reflective layer 6 are also shown in Figure 12.

It can be seen from Figure 12 that a CNR of the recording mark having a size larger than the resolution limit were increased by providing the reflective layer 6.

WORKING EXAMPLE 2-2 (The optical recording medium having the structure shown in Figure 2 and comparison based on the thickness of the reflective layer 6)

Samples each having a structure shown in Figure 3 were fabricated in the same manner as that in Working Example 2-1 except that a reflective layer 6 was formed so as to have a thickness shown in Figure 13. A recording mark train whose pitch was 200 nm (mark length was 200 nm) was recorded in each sample using the laser beam whose recording power was set to the optimum power thereof, and the recording mark train was reproduced using the low resolution pick up and the laser beam whose readout power was set to 4 mW. The results of reproducing of the recording mark train are shown in Figure 13.

It can be seen from Figure 13 that a CNR of a signal reproduced in accordance with the principle of the super-resolution limit reproduction decreases as the reflective layer 6 beomes thicker.

WORKING EXAMPLE 3 (The optical recording medium having the structure shown in Figure 4 and the effect of the precipitation activating layer 7)

A sample having a structure shown in Figure 4 was fabricated by forming a silicon nitride layer having a thickness of 5 nm as the precipitation activating layer 7 between the first dielectric layer 31 and the noble metal oxide layer 4 of the optical recording disc sample fabricated in Working Example 1-1. The silicon nitride layer was formed by the sputtering process using a Si target in a mixed gas of Ar and $N_2$ whose flow rate ratio was 8:2. The composition of the silicon nitride layer was $Si_3N_4$.

A recording mark train whose pitch was 400 nm (mark length was 200 nm) was recorded using the laser beam whose recording power was set to 10 mW and the recording mark train was then reproduced using the low resolution pick up. As a result, when the laser beam whose readout power was set to 3 mW was used, a reproduced signal having the maximum CNR of 35 dB was obtained. Since the readout power of the laser beam at which a reproduced signal having the maximum CNR was obtained was 4 mW in the sample fabricated in Working Example 1-1, it can be understood that the reproduction sensitivity was increased by proving the precipitation activating layer 7.

WORKING EXAMPLE 4 (The optical recording medium having the structure shown in Figure 5 wherein no light absorption layer 5 was provided)

As shown in Figure 5, optical recording disc samples each having a multi-layered structure of a substrate 2, a first dielectric layer 31, a noble metal oxide layer 4 and a second dielectric layer 32 were fabricated. Ech of these samples has a structure obtained by removing the light absorption layer 5 and the third dielectric layer 33 from the sample of Working Example 1-1. However, the noble metal oxide layer 4 was formed so as to have a thickness of 18 nm or 60 nm.

Recording mark trains whose pitch was 400 nm (mark length was 200 nm) were recorded in the sample including the noble metal oxide layer 4 having a thickness of 18 nm using the laser beam whose recording power was set to 5 to 14 mW and the recording mark trains were reproduced using the low resolution pick up and the laser beam whose readout power was set to 4 mW. As a result, a CNR of a reproduced signal could not be measured. On the other hand, when a recording mark train whose pitch was 1.6 μm (mark length was 800 nm) was recorded in this sample using the laser beam whose recording power was set to 14 mW and the recording mark train was reproduced using the laser beam whose readout power was set to 4 mW, a reproduced signal having a CNR of 34 dB was obtained.

Further, a recording mark train whose pitch was 400 nm (mark length was 200 nm) was recorded in the sample including the noble metal oxide layer 4 having a thickness of 60 nm using the laser beam whose recording power was set to 7 mW and recording mark train was reproduced using the low resolution pick up and the laser beam whose readout power was set to 4 mW. As a result, a reproduced signal having a CNR of 12 dB was obtained. On the other hand, when a recording mark train whose pitch was 1.6 μm (mark length was 800 nm) was recorded in this sample using the laser beam whose recording power was set to 7 mW and the recording mark train was reproduced using the laser beam whose readout power was set to 4 mW, a reproduced signal having a CNR of 33 dB was obtained.

These results indicate that even in the case where a light absorption layer is not provided, data can be recorded and reproduced by a normal reproduction method. Therefore, it can be understood that the noble metal oxide layer 4 itself serves as a recording layer.

However, in the sample including the noble metal oxide layer 4 having a thickness of 18 nm, the recording mark train whose pitch was 400 nm (mark length was 200 nm) could not be reproduced in accordance with the principle of the super-resolution limit reproduction and it can be considered that the above described mechanism was not operated. On the other hand, in the sample including the noble metal oxide layer 4 having a thickness of 60 nm, although a CNR of a reproduced signal was low, the recording mark train could be reproduced in accordance with the principle of the super-resolution limit reproduction.

It is reasonable to assume that the reason why a CNR of a reproduced signal could not be measured in accordance with the principle of the super-resolution limit reproduction or a CNR of a signal reproduced in accordance with the principle of the super-resolution limit reproduction became low is as follows. First, it can be considered that since data could be reproduced by a normal reproduction method, the noble metal oxide layer 4 absorbed the laser beam and heated when data were to be recorded, whereby AgOx was decomposed into Ag and $O_2$ to form a recording mark. However, it can be considered that since almost no AgOx was present in the noble metal oxide layer 4 after data had been recorded and there was no layer capable of absorbing the laser beam in the medium, even if the laser beam for reproducing data was irradiated onto the medium, the temperature of the noble metal oxide layer 4 was not sufficiently increased and almost no Ag particle deposited or a sufficient amount of the Ag particles did not deposit. To the contrary, it is reasonable to assume that the reason why the data could be reproduced in accordance with the principle of the super-resolution limit reproduction when the noble metal oxide layer 4 was formed thicker was that an amount of light absorbed in the noble metal oxide layer 4 became large.

## Claims

1. A method for recording data in an optical recording medium by irradiating a laser beam for recording data thereonto and forming a recording mark train and reproducing data from the optical recording medium by irradiating a laser beam for reproducing data having a wavelength λ using an optical system having a numerical aperture NA thereonto and reading the recording mark train,

   the optical recording medium comprising a noble metal oxide layer containing a noble metal oxide,

   the recording mark train being formed by decomposing the noble metal oxide and deforming the noble metal oxide layer and including at least one recording mark having a length shorter than 0.37λ / NA, and the method for recording and reproducing data comprising steps of irreversibly depositing noble metal particles in the noble metal oxide layer and irradiating the laser beam for reproducing data onto the thus deposited noble metal particles, thereby reading the recording mark train.

2. A method for recording and reproducing data in accordance with Claim 1, wherein the noble metal oxide layer contains at least one of silver oxide, platinum oxide and palladium oxide.

3. A method for recording and reproducing data in accordance with Claim 1, wherein the optical recording medium further comprises a first dielectric layer and a second dielectric layer so as to sandwich the noble metal oxide layer.

4. A method for recording and reproducing data in accordance with Claim 3, wherein the optical recording medium further comprises a light absorption layer containing metal and/or metalloid as a primary component and the light absorption layer and the noble metal oxide layer are disposed so as to sandwich the second dielectric layer.

5. A method for recording and reproducing data in accordance with Claim 4, wherein the light absorption layer contains at least Sb and/or Te.

6. A method for recording and reproducing data in accordance with Claim 4, wherein the optical recording medium further comprises a third dielectric layer, and the third dielectric layer and the second dielectric layer are disposed so as to sandwich the light absorption layer.

7. A method for recording and reproducing data in accordance with Claim 6, wherein the optical recording medium further comprises a reflective layer containing metal and/or metalloid as a primary component, and the reflective layer and the light absorption layer are disposed so as to sandwich the third dielectric layer.

8. An optical recording medium comprising a noble metal oxide layer containing a noble metal oxide and the noble metal oxide is constituted as platinum oxide and/or palladium oxide.

# FIG. 1

**A**
**BEFORE**
**RECORDING DATA**

- 33
- 5 Ag-In-Sb-Te
- 32
- 4 $AgO_x$
- 31

LASER BEAM FOR RECORDING DATA OR REPRODUCING DATA

**B**
40
**REPRODUCED**
**WITH PR OF 1 MW**

- 33
- 5
- 32
- } 4 $Ag+O_2$
- 31

500nm

**C**
40
**REPRODUCED WITH PR OF**
**4 MW AND THEN**
**REPRODUCED WITH PR OF**
**1 MW**

- 33
- 5
- 32
- } 4 $Ag+O_2$
- 31

500nm

FIG. 2

FIG. 3

FIG. 4

FIG. 5

FIG. 6

FIG. 7

FIG. 8

EP 1 555 666 A1

FIG. 9

FIG. 10

FIG. 11

FIG. 12

EP 1 555 666 A1

FIG. 13

EP 1 555 666 A1

# FIG. 14

A

BEFORE
RECORDING DATA

— 33
— 5 Ag-In-Sb-Te
— 32
— 4 PtO$_y$
— 31

400nm

⇧

LASER BEAM FOR RECORDING DATA OR REPRODUCING DATA

B

41

REPRODUCED
WITH PR OF 1 MW

— 33
— 5
— 32
— 4 PtO$_y$
— 31

4 Pt+O$_2$

400nm

C

41

REPRODUCED WITH PR OF
4 MW AND THEN
REPRODUCED WITH
PR OF 1 MW

— 33
— 5
— 32
— 4 PtO$_y$
— 31

4 Pt+O$_2$

400nm

FIG. 15

FIG. 16

**EP 1 555 666 A1**

<table>
<tr><td colspan="2"><strong>INTERNATIONAL SEARCH REPORT</strong></td><td>International application No.<br>PCT/JP03/07974</td></tr>
</table>

A. CLASSIFICATION OF SUBJECT MATTER
  Int.Cl$^7$ G11B7/24, 7/004

According to International Patent Classification (IPC) or to both national classification and IPC

B. FIELDS SEARCHED

Minimum documentation searched (classification system followed by classification symbols)
  Int.Cl$^7$ G11B7/24, 7/004

Documentation searched other than minimum documentation to the extent that such documents are included in the fields searched
  Jitsuyo Shinan Koho          1922–1996   Toroku Jitsuyo Shinan Koho   1994–2003
  Kokai Jitsuyo Shinan Koho    1971–2003   Jitsuyo Shinan Toroku Koho   1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Hiroshi FUJI et al., A Near-Field Recording and Readout Technology Using a Metallic Probe in an Optical Disk, Jpn.J.Appl.Phys., February 2000, Vol.39, (2000), pages 980 to 981 | 1–7 |
| Y | JP 2002-109786 A (Toshiba Corp.), 12 April, 2002 (12.04.02), Full text; all drawings (Family: none) | 1–7 |
| X | JP 6-262854 A (Konica Corp.), 20 September, 1994 (20.09.94), Full text; all drawings (Family: none) | 8 |

☒ Further documents are listed in the continuation of Box C.      ☐ See patent family annex.

| | |
|---|---|
| *  Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>  16 July, 2003 (16.07.03) | Date of mailing of the international search report<br>  29 July, 2003 (29.07.03) |
| Name and mailing address of the ISA/<br>  Japanese Patent Office | Authorized officer |
| Facsimile No. | Telephone No. |

Form PCT/ISA/210 (second sheet) (July 1998)

32

**EP 1 555 666 A1**

## INTERNATIONAL SEARCH REPORT

International application No.

PCT/JP03/07974

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-353341 A  (Victor Company Of Japan, Ltd.), 19 December, 2000 (19.12.00), Full text; all drawings (Family: none) | 1-8 |
| A | JP 2002-269827 A  (Victor Company Of Japan, Ltd.), 20 September, 2002 (20.09.02), Full text; all drawings (Family: none) | 1-8 |
| A | JP 2002-298439 A  (Toshiba Corp.), 11 October, 2002 (11.10.02), Full text; all drawings (Family: none) | 1-8 |
| A | JP 7-210874 A  (Victor Company Of Japan, Ltd.), 11 August, 1995 (11.08.95), Full text; all drawings (Family: none) | 1-8 |
| A | JP 5-28535 A  (Victor Company Of Japan, Ltd.), 05 February, 1993 (05.02.93), Full text; all drawings (Family: none) | 1-8 |
| A | JP 5-242524 A  (Victor Company Of Japan, Ltd.), 21 September, 1993 (21.09.93), Full text; all drawings (Family: none) | 1-8 |
| A | JP 6-290486 A  (Victor Company Of Japan, Ltd.), 18 October, 1994 (18.10.94), Full text; all drawings (Family: none) | 1-8 |
| A | JP 5-28498 A  (Ricoh Co., Ltd.), 05 February, 1993 (05.02.93), Full text; all drawings (Family: none) | 1-8 |

Form PCT/ISA/210 (continuation of second sheet) (July 1998)